# EUROPEAN PATENT SPECIFICATION

(11) **EP 0 621 587 B1**
(45) Date of publication and mention of the grant of the patent: **22.09.1999**
(21) Application number: 93924807.6
(22) Date of filing: 10.11.1993
(51) Int. Cl.: G11B 7/095

(54) **DEVICE FOR DRIVING OPTICAL PART**
VORRICHTUNG ZUM ANTRIEB EINES OPTISCHEN TEILES
DISPOSITIF DE COMMANDE D'UNE PARTIE OPTIQUE

(30) Priority: 12.11.1992 JP 30263392
(43) Date of publication of application: 26.10.1994
(73) Proprietor: SEIKO EPSON CORPORATION, Shinjuku-ku, Tokyo 163-0811 (JP)
(72) Inventor: ITOH, Hirokazu, Suwa-shi, Nagano-ken 392 (JP); MAKIGAKI, Tomohiro, Suwa-shi, Nagano-ken 392 (JP)
(74) Representative: Sturt, Clifford Mark
(86) International application number: JP9301642
(87) International publication number: WO9411869

(56) References cited:
- EP-A- 0 464 912
- WO-A-93/08566
- GB-A- 2 202 405
- JP-A- 1 118 224
- JP-A- 58 050 336
- JP-A- 60 001 630
- JP-A- 60 246 032
- JP-A- 61 296 536
- JP-U- 1 154 520
- JP-U- 2 005 117
- JP-U- 60 123 724
- US-A- 4 538 882
- PATENT ABSTRACTS OF JAPAN vol. 9, no. 308 (P-410) (2031) 4 December 1985 & JP-A-60 138 745 (TOSHIBA K.K.) 23 July 1985
- PATENT ABSTRACTS OF JAPAN vol. 9, no. 217 (P-385) (1940) 4 September 1985 & JP-A-60 076 040 (NEC HOME ELECTRONICS K.K.) 30 April 1985
- PATENT ABSTRACTS OF JAPAN vol. 9, no. 156 (P-368) (1879) 29 June 1989 & JP-A-60 029 945 (OLYMPUS KOGAKU KOGYO K.K.) 15 February 1985
- PATENT ABSTRACTS OF JAPAN vol. 10, no. 22 (P-424) (2079) 28 January 1986 & JP-A-60 175 226 (TOSHIBA K.K.) 9 September 1985
- PATENT ABSTRACTS OF JAPAN vol. 9, no. 292 (P-406) (2015) 19 November 1985 & JP-A-60 129 937 (HITACHI SEISAKUSHO, K.K.) 11 July 1985
- PATENT ABSTRACTS OF JAPAN vol. 13, no. 19 (P-814) 18 January 1989 & JP-A-63 224 039 (MATSUSHITA ELECTRIC IND CO LTD) 19 September 1988
- PATENT ABSTRACTS OF JAPAN vol. 10, no. 324 (P-512) (2380) 5 November 1986 & JP-A-61 131 243 (FUJITSU LTD.) 18 June 1986
- PATENT ABSTRACTS OF JAPAN vol. 11, no. 164 (P-580) 27 May 1987 & JP-A-61 296 536 (CANON INC.) 27 December 1986
- PATENT ABSTRACTS OF JAPAN vol. 16, no. 430 (P-1417) 9 September 1992 & JP-A-04 147 441 (SHARP CORPORATION)

## Description

### Technical Field

The present invention relates to an optical drive device provided in an optical recording and reproduction apparatus for driving optical component parts, such as an objective lens, in accordance with displacement of a disk. Particularly, the present invention relates to a device for driving optical component parts that includes plate springs which are used to drive the optical component parts in focusing and tracking directions, and which may have an electric wiring function, the drive device thus being made simple and made to include a mobile body of reduced weight, so as to be capable of stably driving the optical component parts at high speed.

### Background Art

A conventional optical recording and reproduction apparatus has an optical component parts drive device of varying type in which plate springs are employed. In such an optical component parts drive device, two pairs of plate springs support a mobile body, as disclosed, for example, in Japanese Patent Publication No. 62-20903.

In this example, however, it is essential to provide intermediary supporting members in order to tie together the two pairs of plate springs which are in turn necessary to support the mobile body in such a manner that the mobile body can be moved in two directions. This requirement hinders the weight of the mobile body from being reduced. In addition, the complicated structure makes dynamic characteristics unstable.

Another known optical component parts drive device employing plate springs is disclosed in Japanese Patent Publication No. 1-118224, in which a mobile body is supported by a pair of support arms each formed by a plate spring having two end portions parallel to a disk and secured to a support structure and a middle section perpendicular to the disk and secured to the mobile body. Each of the plate springs is twisted through 90° at two locations between the centre section and a respective one of its ends. This document is reflecting the preamble of claim 1.

Another known optical component parts drive device employing plate springs is disclosed in Japanese Utility Model Publication No. 2-5117, in which two plate springs support a mobile body, the plate springs being secured at one end to a support structure and at the other end to the mobile body with the ends of the springs connected to the support structure being parallel to a disk. In a first embodiment the ends of the plate springs connected to the mobile body are perpendicular to the surface of the disk and the plate springs are twisted through 90° at one location along their lengths, while in a second embodiment the ends of the plate springs connected to the mobile body are parallel to the disk and the plate springs are twisted through 90° at two separate locations along their lengths.

A further known optical component parts drive device is shown in Japanese Patent Publication No. 60-76040, in which a mobile body is supported by two orthogonal pairs of plate springs, one pair being arranged with both their longitudinal axis and lateral axis in the plane of the plate perpendicular to the surface of the disk and the other pair of plate springs being arranged with both a longitudinal axis and a lateral axis parallel to the surface of the disk.

Finally, yet another known optical component parts drive device is shown in Japanese Patent Publication No. 60-129937, in which a support structure for a mobile body comprises four parallel plate springs, each being connected at one end to a support structure and at the other end to the mobile body, all of the plate springs being arranged so that the plane of the plate spring is parallel to the surface of the disk throughout.

When optical elements, such as a light-emitting element and a light-receiving element, are integrated with the mobile body, the inevitable need to provide electric wires for these elements makes the structure more complicated and make dynamic characteristics more unstable.

### Disclosure of the Invention

This invention provides an optical component parts drive device including:
a mobile body having optical component parts for radiating a light spot onto a recording surface of a disk on which information is recorded, and also having a holder for retaining said optical component parts; driving means for driving said mobile body in two directions comprising a radial direction of the disk and a direction perpendicular to a plane defined by the surface of the disk; and supporting means for supporting said mobile body in such a manner that said mobile body is movable in said two directions;
said supporting means comprising at least two elongate substantially planar elastic plates each defining a generally longitudinal axis and a lateral axis in the plane of the plate which is perpendicular to the longitudinal axis, and
characterised in that each lateral axis is neither parallel with the surface of the disk nor perpendicular to the surface of the disk.

The plate springs may be integral with wires for conveying various signals.

### Brief Description of the Drawings

Fig. 1 is a perspective view showing a first embodiment of the present invention;
Fig. 2(a) is an upper plan view showing the first embodiment of the present invention;
Fig. 2(b) is a sectional view taken along line X-X' shown in Fig. 2(a);
Fig. 3(a) is an upper plan view showing a driven state of the first embodiment of the present invention;
Fig. 3(b) is a side view showing a driven state of the first embodiment of the present invention;
Fig. 4 is a perspective view showing examples of plate springs which may be incorporated in the first embodiment of the present invention;
Fig. 5 is a perspective view showing a second embodiment of the present invention;
Fig. 6 is a sectional view showing a structure formed by a plate spring and a damping member;
Fig. 7 is a perspective view showing a third embodiment of the present invention;
Fig. 8(a) is an upper plan view showing a fourth embodiment of the present invention;
Fig. 8(b) is a side view showing the fourth embodiment of the present invention;
Fig. 9(a) is a perspective view showing a fifth embodiment of the present invention;
Fig. 9(b) is a partially cut-away perspective view of the fifth embodiment of the present invention;
Fig. 10(a) is a view for illustrating a stand-by state of the fifth embodiment of the present invention;
Fig. 10(b) is a view for illustrating a deformed state of the fifth embodiment of the present invention;
Fig. 11 is a view for illustrating the flatness ratio of the present invention;
Figs. 12(a), 12(b), 12(c) and 12(d) are views showing external appearances of modifications of plate springs of the present invention;
Fig. 13 is a view for illustrating a modification of the fifth embodiment of the present invention;
Fig. 14(a) is a view showing wiring in a plate spring of the present invention;
Figs. 14(b) and 14(c) are sectional views of different types of plate springs of the present invention;
Figs. 15(a) and 15(b) are views for illustrating another embodiment.

### Best Mode for Carrying Out the Invention

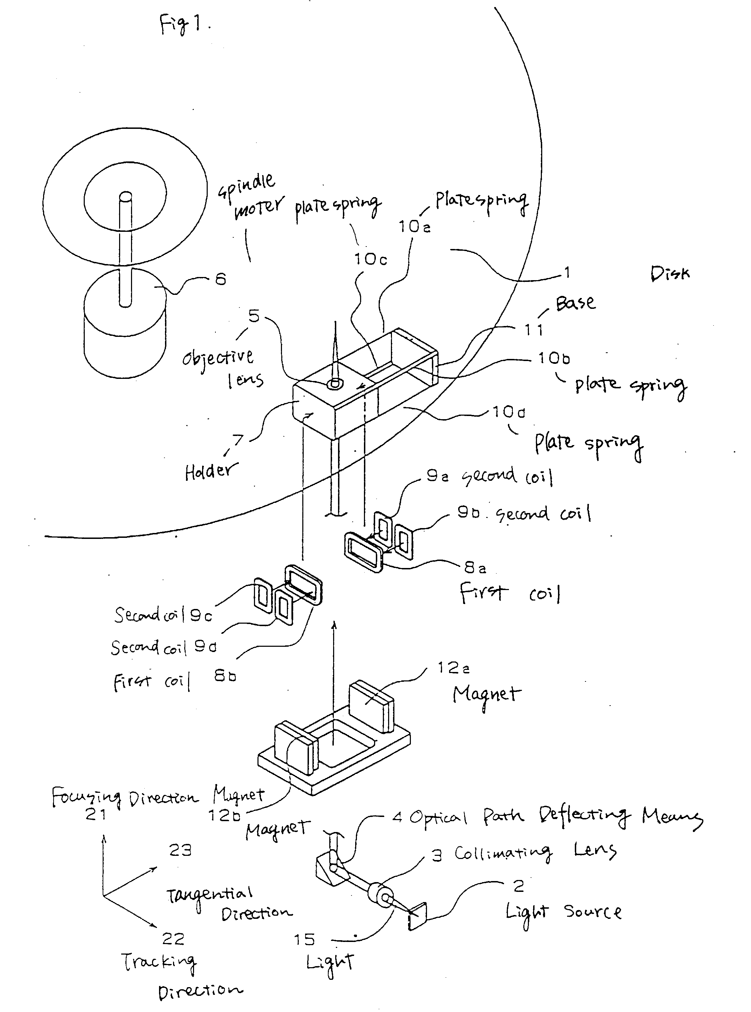

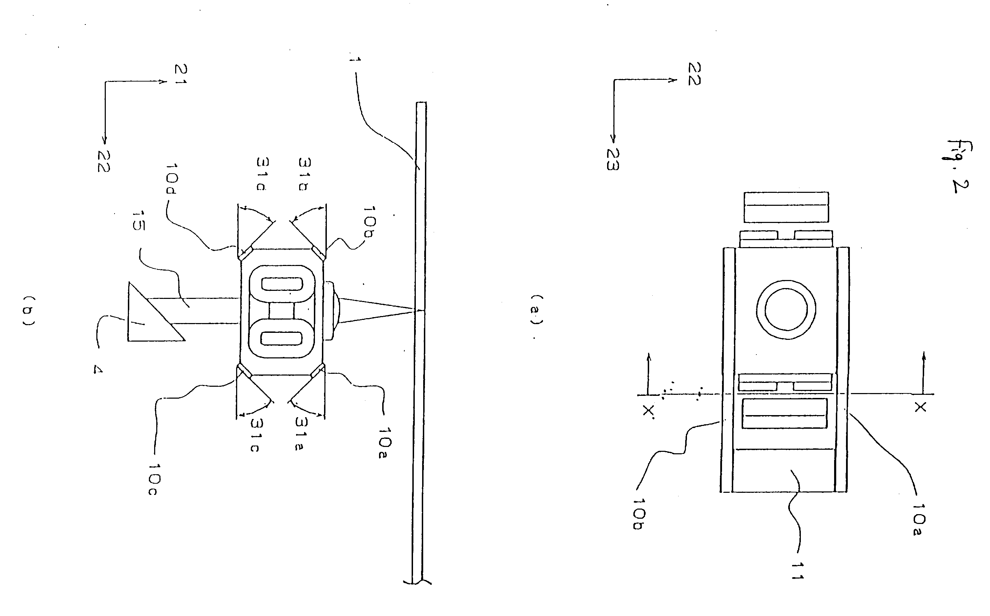

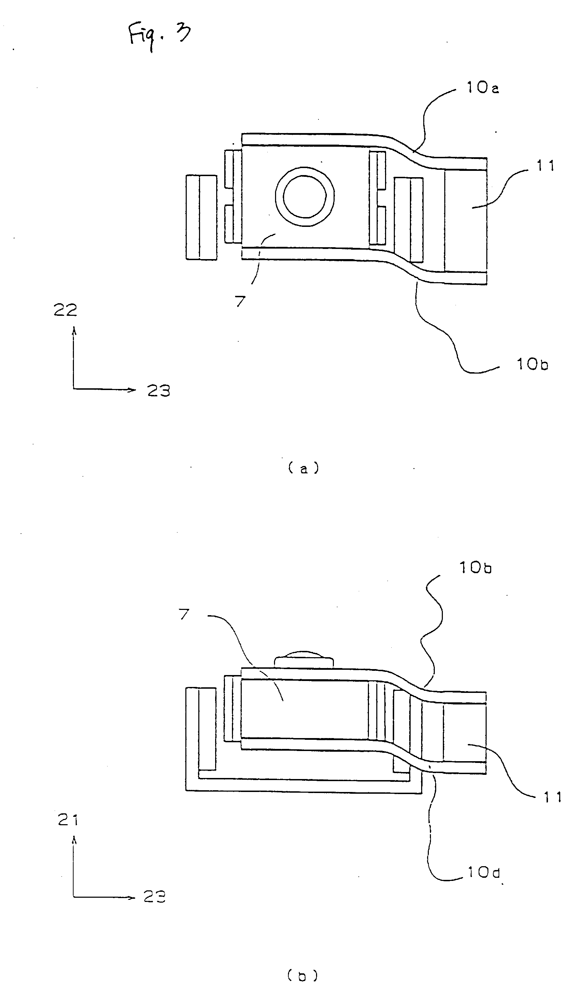

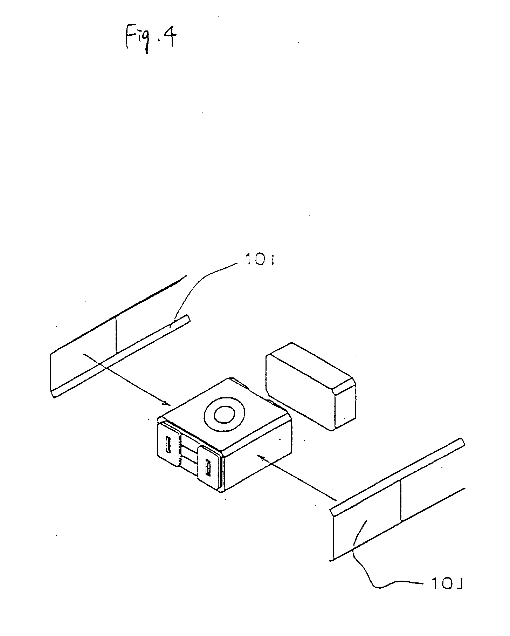

Fig. 1 shows a first embodiment of the present invention. Light 15 generated from a light source 2 is made into a parallel beam by a collimating lens 3. Thereafter, the parallel beam is refracted by an optical path deflecting means 4 in a direction perpendicular to a plane defined by a surface of a disk 1, propagates through an objective lens 5, and forms a light spot on a desired position of a recording surface of the disk. The disk 1, however, may be displaced in a radial direction (hereinafter referred to as "tracking direction"; indicated by an arrow 22) and a direction perpendicular to the plane defined by the disk (hereinafter referred to as "focusing direction'; indicated by an arrow 21) when influenced by vibration of a spindle connected to a spindle motor 6, and/or the eccentricity or the surface waving of the disk itself. Therefore, a mobile body having the objective lens 5 is driven in accordance with such displacement.

The mobile body includes the objective lens 5, a holder 7 for retaining the objective lens, first coils 8a and 8b for driving the mobile body in a focusing direction, and second coils 9a to 9d for driving the mobile body in a tracking direction.

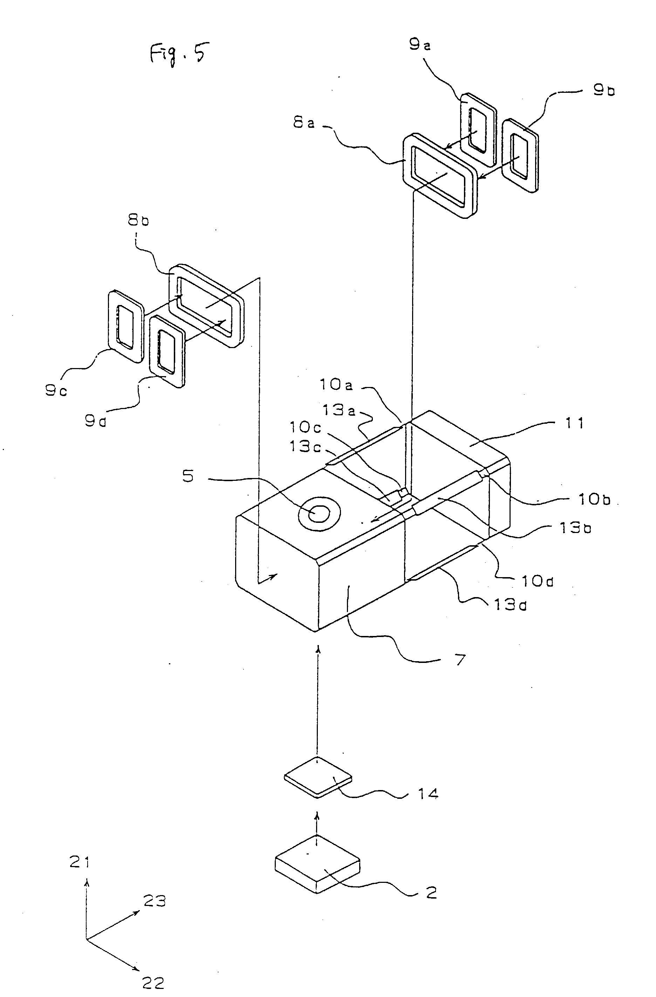

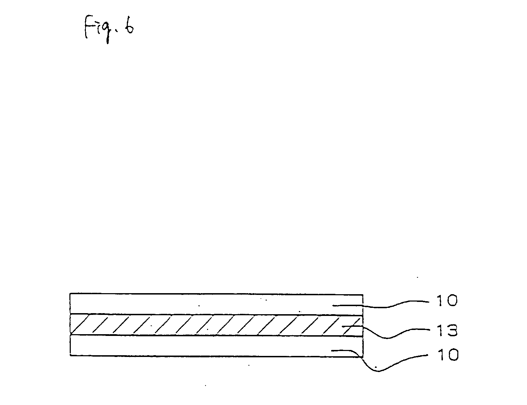

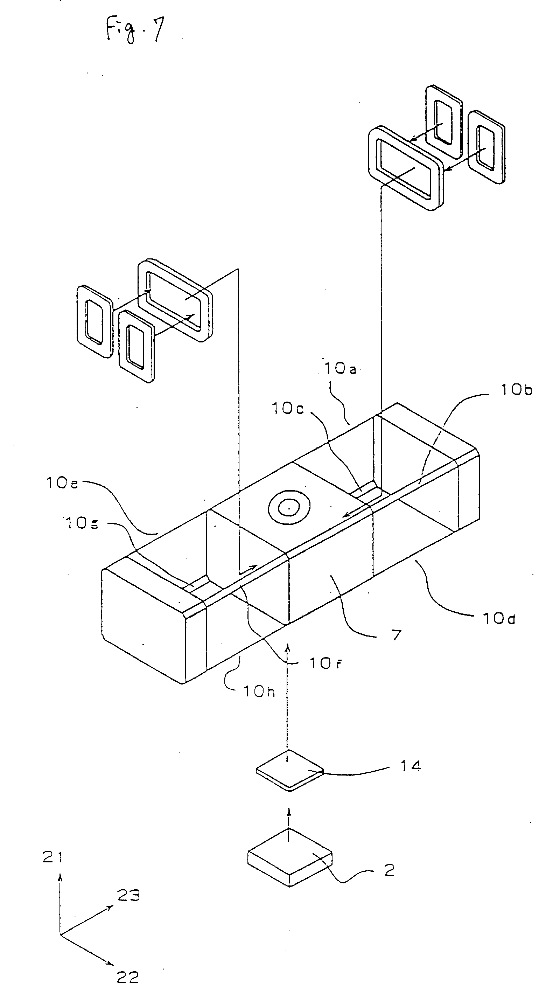

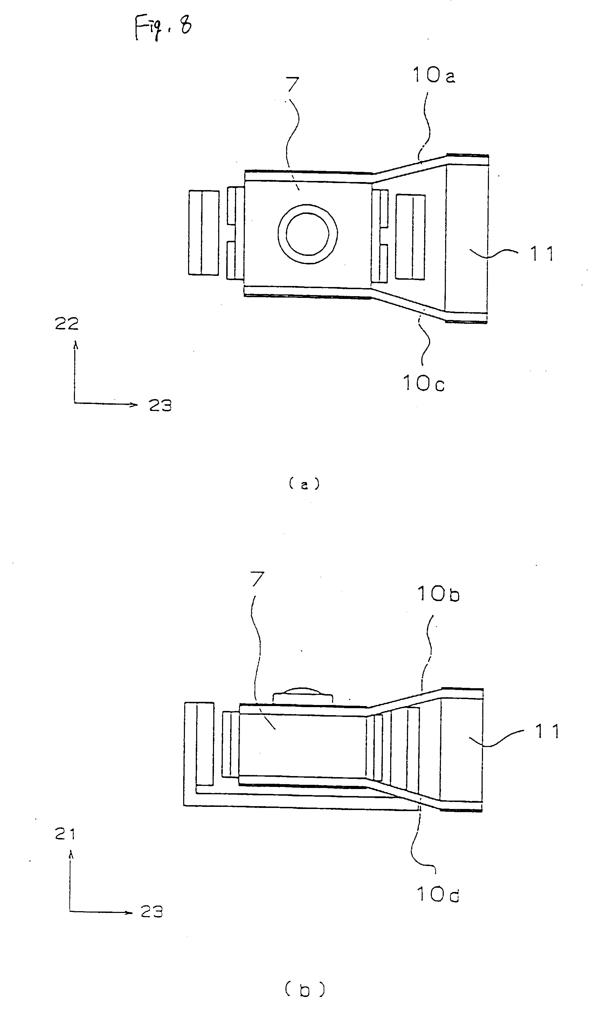

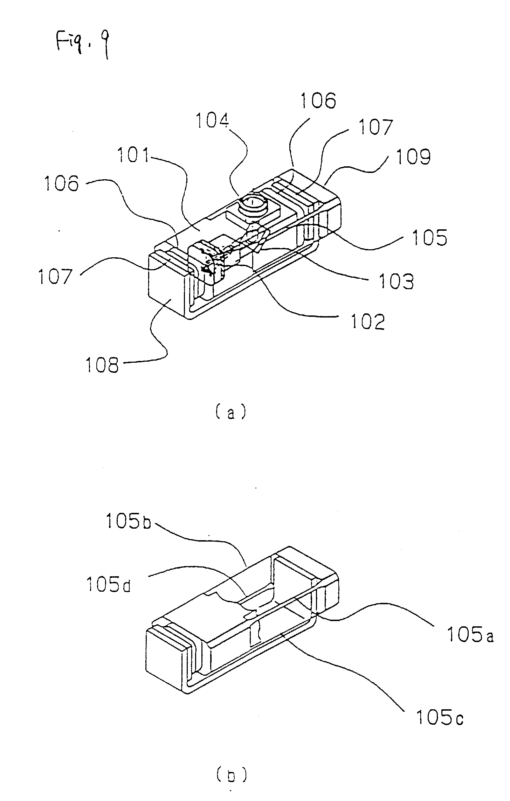

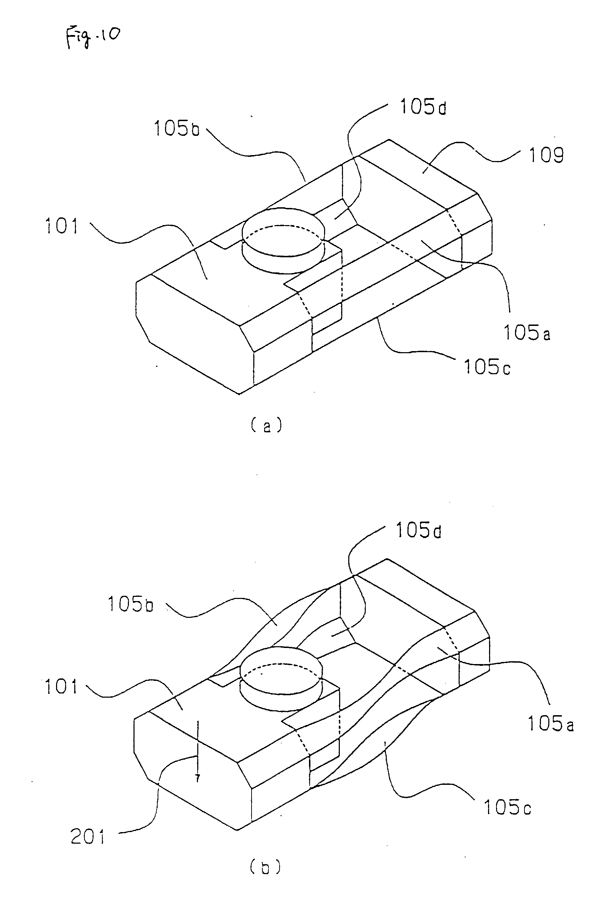

As shown in Figs. 2(a) and 2(b), the mobile body is supported by first end portions of four plate springs 10a to 10d having elasticity. The plate springs 10a to 10d have widths which are directed at arbitrarily selected angles 31a to 31d, respectively, with respect to a plane defined by the disk 1. The second end portions of the plate springs 10a to 10d are fixed to a base 11. As a result, the four plate springs are able to bend in the two directions, i.e., a focusing direction and a tracking direction, as shown in Figs. 3(a) and 3(b); thus, the mobile body is able to move in these two directions. The provision of the angles 31 serves to improve the rigidity of the plate springs against the movement of the mobile body in directions other than the above two directions, such as a tangential direction of the disk.

The material and the shape of the plate springs 10 will be described. A material for forming the plate springs is preferably an elastic metal material such as stainless steel, phosphor bronze or beryllium copper. Each plate spring has a substantially rectangular or trapezoidal cross-sectional configuration having a thickness of 0.005 to 1 mm and a width of 0.1 to 2 mm. Although the plate springs 10 may be made of a plastic material, the use of a metal material, as described above, is advantageous in terms of temperature characteristics and changes with the passage of time.

Next, the angles 31 will be described. The magnitude of the angles 31 determines a spring constant for the focusing direction and that for the tracking direction. That is, the closer to 0 degrees the value of the angles 31, the smaller the spring constant for the focusing direction and the greater the spring constant for the tracking direction. On the other hand, the closer to 90 degrees the value of the angles 31, the greater the spring constant for the focusing direction and the smaller the spring constant for the tracking direction. Since the spring constants are very significant to the dynamic characteristics of the mobile body in the focusing and tracking directions, the values of the angles 31 that determine these constants are important. It is advantageous if the four angles are of substantially equal values that range from 25 to 65 degrees.

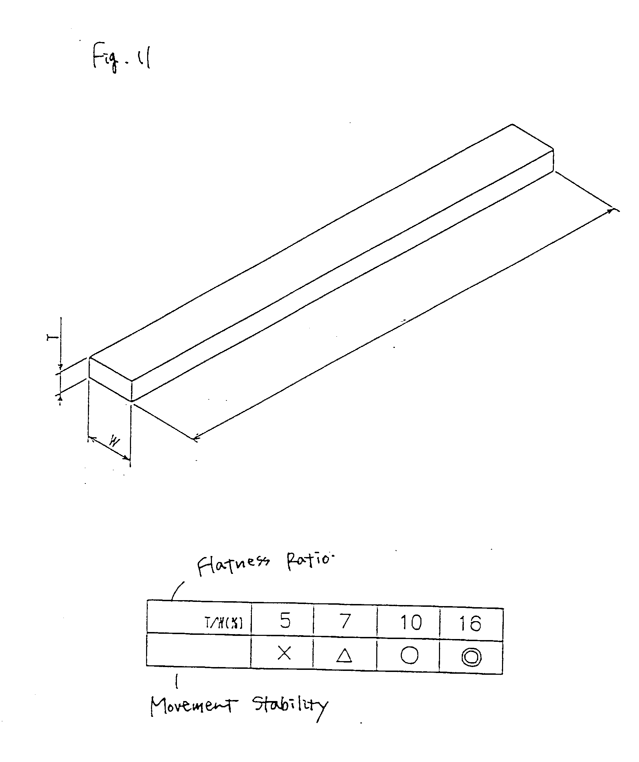

In the embodiment being illustrated, four plate springs support the mobile body. However, such four plate springs may be provided by using, e.g., two members, as shown in Fig. 4, thereby obtaining similar effect.

Next, driving means will be described. As shown in Fig. 1, the first coils 8 for driving the mobile body in a focusing direction have a hollow elongated-circular shape, and are able to generate a driving force in a focusing direction through an electromagnetic action involving magnetic flux generated by opposed magnets 12. Each of the first coils 8a and 8b is secured to one of the end faces of the holder 7 which oppose each other in a tangential direction of the disk, so as to drive the mobile body in a focusing direction with a driving force described above. The second coils 9 for driving the mobile body in a tracking direction have a hollow elongated-circular shape, as in the case of the first coils 8, and are capable of driving the mobile body through an electromagnetic action involving magnetic flux generated by the opposed magnets 12. Two pairs, in total, of the second coils 9a to 9d are secured to the two end faces of the holder 7, with each pair on one of the end faces, as in the case of the first coils. Magnets 12a and 12b constituting the above magnets are disposed on a stationary section with a certain gap between each of these magnets, on one hand, and a corresponding first coil 8 and corresponding second coils 9, on the other.

Each of the first and second coils 8 and 9 comprises a coil of a metal wire mainly made of an electrically conductive material such as copper or aluminum. However, a similar effect may be obtained by using an electrically conductive material, such as the above, formed in patterns on an insulating sheet made of a polyimide resin, a polyurethane resin, or the like. Further, although in the embodiment described above, the first and second coils 8 and 9 are mounted on the holder 7 while the magnets 12 are disposed on a stationary section, the magnets 12 may be mounted on the holder 7 with the first and second coils 8 and 9 being disposed on a stationary section, thereby obtaining a similar effect. Further, although in the above-described embodiment, driving in a focusing direction and driving in a tracking direction commonly employ the magnets 12a and 12b, driving operations in these two directions may employ individual magnets, and a similar effect may be provided. Further, a similar effect may be provided even when the first coils 8, the second coils 9, and the above patterns have substantially rectangular shapes.

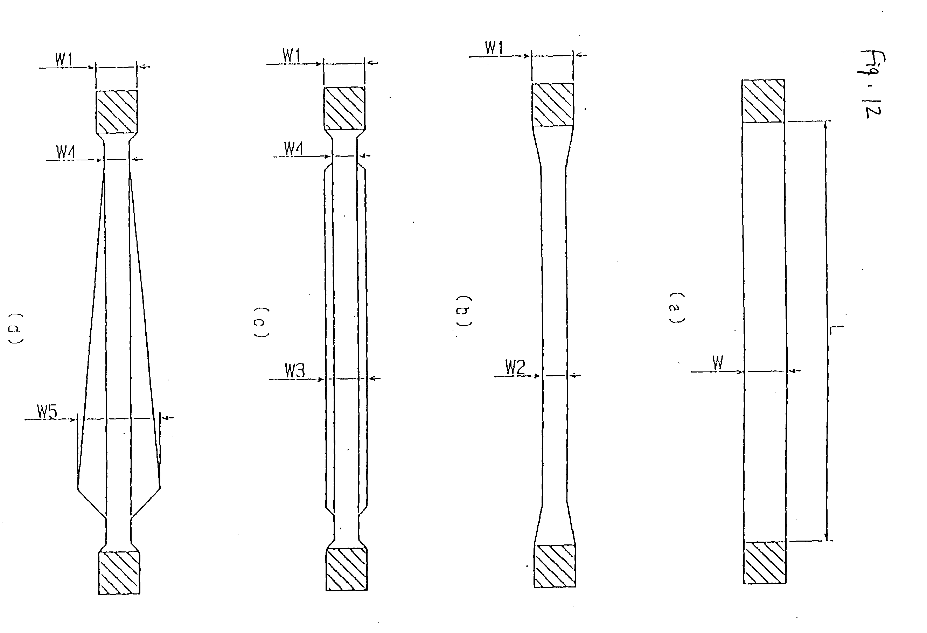

Fig. 5 shows a second embodiment of the present invention. Optical component parts, such as a light source 2, a light diffracting means 14 and an objective lens 5, are retained by a holder 7. A mobile body mainly comprises the holder 7, first coils 8 for effecting driving in a focusing direction, and second coils 9 for effecting driving in a tracking direction.

Light generated from the light source 2 transmits through the light diffracting means 14, and is thereafter condensed by the objective lens 5, forming a light spot on a recording surface of a disk. Since the series of optical component parts from the light source 2 to the objective lens 5 are mounted on the holder 7, no change occurs in the relative positions of the individual optical component parts even when the mobile body is displaced in a focusing or tracking direction.

The mobile body is supported by plate springs 10. Plate springs 10a to 10d constituting the above plate springs have widths directed at angles 31 with respect to a plane defined by the surface of the disk. Damping members 13a to 13d having viscosity are attached to the plate springs 10a to 10d, respectively. The above construction provides effects similar to those provided by the first embodiment.

The damping members 13 will be described. The damping members 13 are mainly made of a material such as silicone rubber, natural rubber, butyl rubber, or ether-containing polyurethane. When the plate springs 10 receive excessive deformation energy caused by displacement of the mobile body, the damping members 13 exhibit viscosity resistance such as to damp the energy. The damping members 13 may be attached to substantially the entire surface of the plate springs 10. However, attaching to part of the plate springs is also effective. Further, a similar effect may be obtained by sandwiching a damping material between two plate spring pieces, as shown in Fig. 6. A damping material may be sandwiched between portions of plate spring pieces, and a similar effect may be obtained.

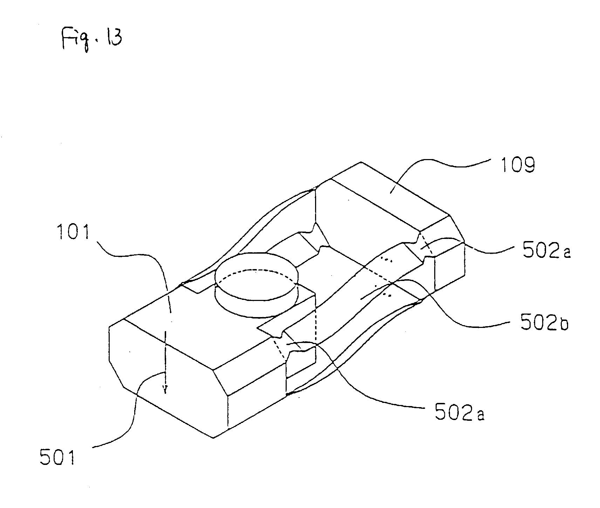

Fig. 7 shows a third embodiment of the present invention. A mobile body has a holder 7. Eight spring plates 10a to 10h, in total, have first ends attached to two end faces of the holder which oppose each other in a tangential direction of a disk, with four spring plates being attached to each end face. The second ends of the plate springs 10a to 10h are fixed to a fixing member. The plate springs 10a to 10h thus disposed have widths directed at angles 31 with respect to a plane defined by a surface of the disk. The above construction provides effects similar to those provided by the first embodiment. Similar effects may be provided even when paired ones of the plate springs, such as plate springs 10a and 10e, which have their longitudinal directions coinciding with each other are formed as portions of a single plate spring member while the other six plate springs are similarly formed by using three plate spring members.

Figs. 8(a) and 8(b) show a fourth embodiment of the present invention. Four plate springs 10a to 10d are secured with widths thereof directed in such a manner as to maintain angles 31 with respect to a plane defined by a disk. The plate springs have portions of lengths thereof lying in a space between a holder 7 and a base 11, which portions are not parallel to a tangential direction (indicated by an arrow 23) of the disk over a part of the space or substantially the entire space. As a result, those plate springs 10 which are opposed to each other when viewed from above, as shown in Fig. 8(a), are arranged in a substantially V-shaped pattern, and so are those plate springs 10 which are opposed to each other when viewed from one side, as shown in Fig. 8(b). The above construction provides effects similar to those provided by the first embodiment. Although in the illustrated construction, the distance between the opposed plate springs is increased toward the base 11, similar effect may be provided when that distance is increased toward the holder 7 and decreased toward the base 11.

Although the above descriptions concern embodiments of optical component parts drive devices for optical recording and reproduction apparatuses, the present invention may be applied to optical component parts drive devices for various apparatuses, and still similar effects may be provided.

Fig. 9(a) schematically shows a fifth embodiment of the present invention. A fixing member 109 supports a mobile body 101, which has an optical unit 102, a reflection mechanism 103, a lens 104 and coils 106, through four plate springs 105a, 105b, 105c and 105d (these being shown in Fig. 9(b)) in such a manner as to allow movement of the mobile body. Light emitted from the optical unit 102 is directed by the reflection mechanism 103 toward the lens 104, transmits through the lens 104, and is condensed on a recording medium (not shown). Light reflected from the recording medium and indicating recorded information returns to the optical unit 102 by taking the above optical path in the reverse direction. An electrical signal is generated from light which has returned to the optical unit. On the basis of the electrical signal, the position of the mobile body is controlled by using electromagnetic force generated between the coils 106 and magnets 107 due to current flowing in the coil 106

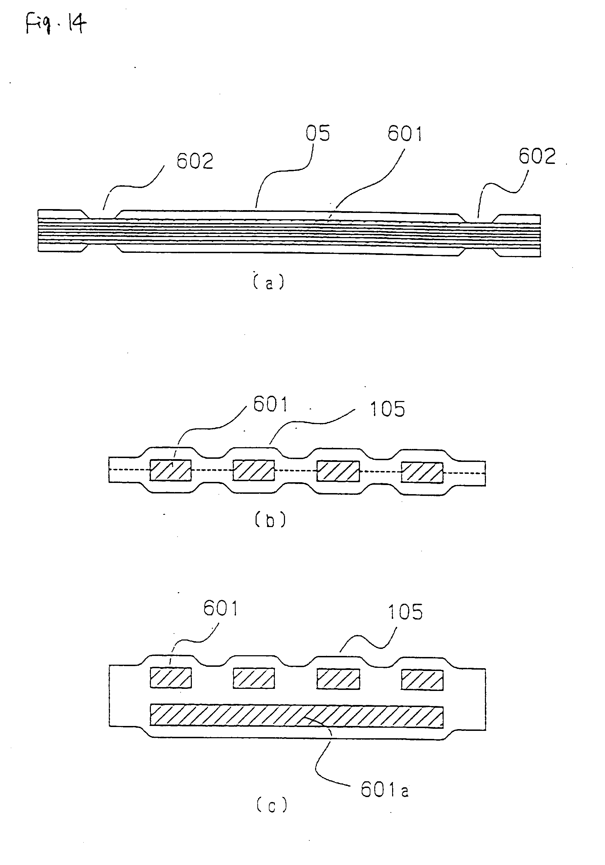

Figs. 10(a) and 10(b) are views for illustrating this embodiment, the views depicting the embodiment schematically in order to illustrate the operation of the plate springs 105. Fig. 10(a) shows a state in a neutral position. In this state, the deformation of the plate springs 105a, 105b, 105c and 105d is small.

Fig. 10(b) shows a state of being displaced in one of the focusing and tracking directions in which the mobile body 101 is able to move, for example, displaced in the direction indicated by an arrow 201. In this state, the plate springs 105a, 105b, 105c and 105d are deformed in a complex deformation mode including torsional deformation and deflectional deformation.

It has been found, in the production of this embodiment, that the behavior of a plate springs greatly varies depending on the width and thickness of the plate spring. Experiments have been conducted, finding that the behavior of a plate spring having a length L which is eight or more times a width W thereof, as shown in Fig. 11, is stable when the plate spring is configured to have a flatness ratio (i.e., the ratio (= T/W) of a thickness T of the plate spring with respect to the width W thereof) above 7 %, whereas when the plate spring is configured to have a flatness ratio below 7 %, the behavior of the plate spring is unstable. It has also been found that stability is greatly improved when the flatness ratio is above 16 %, as shown in Table in Fig. 11.

Figs. 12(a) to 12(d) show various modifications of plate springs which may be used in this embodiment. The hatched portions indicate portions for mounting to the mobile body 101 and the fixing member 109. Fig. 12(a) shows a plate spring having a length L and a width W which satisfy the interrelationship shown in Fig. 11, this being the simplest among the modifications.

Fig. 12(b) shows a modification in which, while the mounting portions have a width W1, a central linear portion of the plate spring has a width W2 smaller than the width W1. This arrangement is effective for preventing unsatisfactory movement from being caused by a high rigidity of a plate spring when the plate spring is formed of a material having a relatively great thickness T. In this case, T/W2 is the flatness ratio that relates to the stability of behavior.

Fig. 12(c) shows a modification in which the plate spring has a central linear portion having a width W3, and also has portions the width of which is reduced from the width W3. This arrangement is effective for preventing unsatisfactory movement from being caused by a low rigidity of a plate spring when the plate spring is formed of a material having a relatively small thickness T. In this case, T/W4 is the flatness ratio that relates to the stability of behavior.

Fig. 12(d) shows a modification in which the plate spring has a central linear portion having a width of various values. That is, the width of the central portion changes gradually from a width W5 to a width W4. This arrangement serves to disperse the natural frequency of the plate spring, that is, to lower the peak of amplitude at the natural frequency, which is advantageous to control.

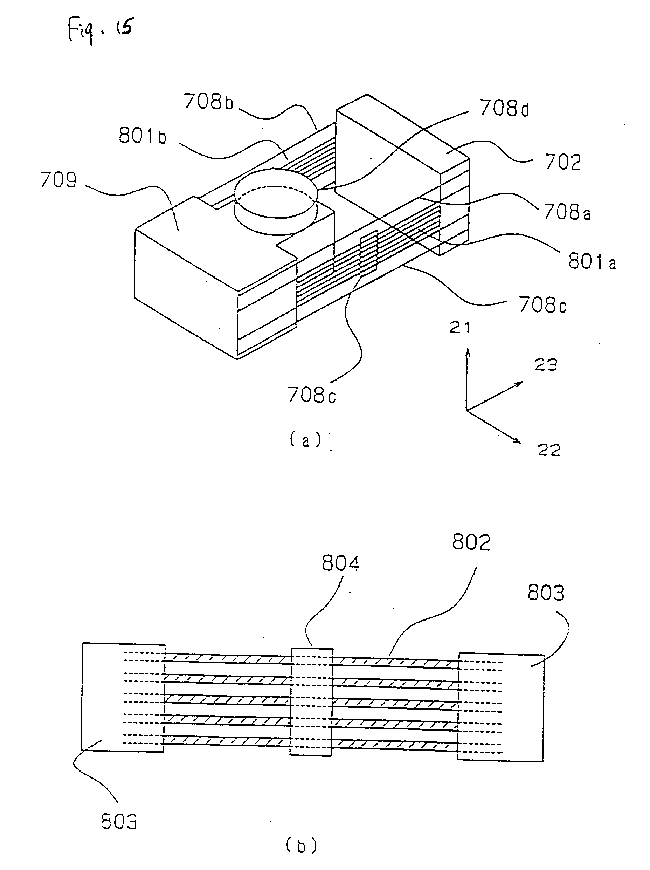

Fig. 13 shows a modification of the fifth embodiment, in which plate springs of the type shown in Fig. 12(c) are combined. The drawing shows a state of being displaced in one of the focusing and tracking directions in which the mobile body 101 is able to move, for example, displaced in the direction indicated by an arrow 501. In this state, each plate spring undergoes torsional deformation in width reduced portions 502a and deflectional deformation in a central portion 502b. Thus, when a plate spring has width reduced portions at either end thereof, a dispersed-deformation mode is effected, in which movement is stabilized and the range of linear movement is widened. It has been confirmed, from the results of certain experiments, that relatively simple deflection rigidity has dominant influence on the natural frequency in this modification, and that deflection rigidity is the rigidity factor that requires consideration in design.

Fig. 14(a) and 14(b) show an example of wiring arranged through the plate springs of this embodiment. As shown in Fig. 14(a), four wires 601 are arranged substantially parallel to each other in each of the plate springs 105 while extending from one end of the plate spring 105 to the other. The wires are formed by etching a foil of a copper-alloy spring material containing beryllium, and have a substantially rectangular cross-sectional configuration, as shown in Fig. 14(b).

As shown in Fig. 14(b), the outer form of each plate spring 105 of this embodiment is produced by coating a polyimide resin on two opposed side surfaces of the wires. Regarding a material for this purpose, an insulating material, other than polyimide, may be used. Regarding a production method, a method comprising other than resin coating, such as a method comprising application of a sheet-shaped material or injection forming, may be used.

Another example is shown in Fig. 14(c). As shown in this drawing, it is possible to combine wires 601 in a layered structure with a wire, such as a wire 601a, having a different cross-sectional area.

With the arrangement of each plate spring 105 shown in Fig. 14(a), there is a risk that portions of wires 601 at the width reduced portions 602 may be exposed on those surface portions of the outer form at either end. However, since the four plate springs 105 are not disposed in contact with each other, no substantial problem arises from the above risk.

In this embodiment, four wires 601 are disposed in each of the four plate springs 105, thereby disposing sixteen wires in total. As shown in Fig. 9(b), since the plate springs 105a, 105b, 105c and 105d are isolated from each other, electricity has small influence between the plate springs. However, four wires 601 which are disposed in proximity to each other in each plate spring 105 are likely to be electrically influenced therebetween. In view of this fact, this embodiment is arranged such that a first line for conveying a received-light signal output from the optical unit 102, a second line for a light-source driving signal to be input to the optical unit 102, and a third line for a coil driving signal for supplying current to the coils 106 for driving the mobile body 101, that is, signal lines for conveying current of different levels, are not provided in a single plate spring. Specifically, wires forming a received-light signal line are all disposed in the plate springs 105c and 105d, wires forming a light-source driving signal line are all disposed in the plate spring 105b, and wires forming a coil driving signal line are all disposed in the plate spring 105a. When signal lines are thus arranged, it is possible to realize stable control operations.

Figs. 15(a) and 15(b) show another embodiment. In this embodiment, four wires 708a to 708d support a mobile body 709 in such a manner as to allow movement of the mobile body, and wiring elements 801a and wiring elements 801b are disposed at locations on two opposed side surfaces of the mobile body 709. In this arrangement, it is desired, from the viewpoint of stability of moving performance, that the wiring elements have a sufficiently smaller elasticity than that of the wires.

The wiring elements in this embodiment are such that, as shown in Fig. 15(b), first ends of a plurality of wires 802 and second ends of the same are individually integrated by insulators 803, and that intermediate insulators 804 are provided at intermediate positions, thereby preventing contact between the wires while realizing a low elasticity. Each wire 802 may be coated with another insulator, as in the case of a coated copper wire, so long as the wire has a desired cross-sectional configuration. Further, each wire 802 may be made of an electrically conductive material. However, in order to improve durability, a copper-containing spring material, such as beryllium copper, is preferable.

A material having viscosity, such as rubber, is used to form the intermediate insulators 804, so as to damp vibration to thereby improve movement stability.

If the intermediate insulators 804 are made of a viscous material having an even lower elasticity, the entire surface of the wires 802 may be covered.

Next, signals will be described. In this embodiment, a line for a driving signal to be supplied to a driving means (not shown) for driving the mobile body 709, and a line for a driving signal to be supplied to a light-emitting means (not shown) within the mobile body 709 are formed in the wiring means 801a. On the other hand, a line for a signal from a light-receiving means (not shown) within the mobile body 709 is formed in the wiring means 801b. Thus, noise in a signal, particularly a signal from the light-receiving means, is reduced.

### Industrial Applicability

As has been described above, according to the present invention, plate springs have widths angled with respect to a plane defined by a surface of a disk, so that a simple construction enables a mobile body to be displaced in two directions comprising a focusing direction and a tracking direction. This arrangement makes intermediary supporting members unnecessary, and realizes a simple construction of an optical component parts drive device.

When plate springs serving as supporting means also serve to provide an electric wiring function, it is possible to eliminate a wiring system, which has been necessary as a system separate from a supporting system. This is very advantageous in terms of costs.

When plate springs are used in their twisted position, it is possible to easily change characteristics, such as to reduce rigidity or to impart isotropic property to rigidity, in accordance with the aim of control. Thus, an optical component parts drive device is capable of realizing optimum control, and capable of being applied to wide variety of apparatuses.

## Claims

1. An optical component parts drive device including:
a mobile body (7) having optical component parts (2, 3, 4, 5) for radiating a light spot onto a recording surface of a disk (1) on which information is recorded, and also having a holder for retaining said optical component parts; driving means (8a-b, 9a-d) for driving said mobile body in two directions comprising a radial direction (22) of the disk and a direction (21) perpendicular to a plane defined by the surface of the disk; and supporting means (10a-d) for supporting said mobile body in such a manner that said mobile body is movable in said two directions;
said supporting means (10a-d) comprising at least two elongate substantially planar elastic plates each defining a generally longitudinal axis and a lateral axis in the plane of the plate which is perpendicular to the longitudinal axis, and
characterised in that each lateral axis is neither parallel with the surface of the disk (1) nor perpendicular to the surface of the disk (1).

2. An optical component parts drive device according to claim 1, wherein said plates (10) have widths directed at substantially equal angles (31) with respect to said plane defined by the disk.

3. An optical component parts drive device according to claim 1, wherein said plates (10) are joined to said mobile body (7) on first joint surfaces and joined to a fixing member on second joint surfaces which are not parallel with said first joint surfaces.

4. An optical component parts drive device according to claim 1, claim 2 or claim 3, further including a viscous member attached to part of or substantially the entire surface of said plates (10).

5. An optical component parts drive device according to claim 1, claim 2 or claim 3, wherein each of said plates (10) satisfies a ratio of a thickness thereof with respect to a width thereof, said ratio being not less than 7 %.

6. An optical component parts drive device according to claim 5, wherein each of said plates (10) has at least one width reduced portion (W2).

7. An optical component parts drive device according to claim 6, wherein each of said plates (10) has at least two width reduced portions (W4) located at either end portion of the plate in the vicinity of portions (W1) at which the plate is mounted to said mobile body (7) and said fixing member.

8. An optical component parts drive device according to claim 1, claim 2 or claim 3, wherein said supporting means (10) comprises said plates and at least four reinforcing members.

9. An optical component parts drive device according to any one of the preceding claims characterised in that the longitudinal axes of the elongate plates (10) extend in a direction which is substantially parallel to the plane defined by the surface of the disk (11).

10. An optical component parts drive device according to any one of the preceding claims characterised in that the longitudinal axes of the elongate plates (10) are substantially parallel to one another.

11. An optical component parts drive device according to claim 1, wherein the mobile body (7) further includes light-receiving means, and
said optical component parts drive device supporting means comprises at least four elastic plates (10), said plates having a plurality of wires (601) whose first ends are electrically connected to said light-emitting means (2) and said light-receiving means as well as to said driving means, and whose second ends are electrically connected to an external circuit on the outside of said optical component parts drive device.

12. An optical component parts drive device according to claim 1, wherein the mobile body (7) further includes light-receiving means, and said supporting means comprises at least four elastic plates (10) and at least four reinforcing members, said plates having a plurality of wires (601) whose first ends are electrically connected to said light-emitting means (2) and said light-receiving means as well as to said driving means, and whose second ends are electrically connected to an external circuit on the outside of said optical component parts drive device.

## Patentansprüche

1. Antriebsvorrichtung für Optikkomponententeile, umfassend:
einen mobilen Körper (7) mit Optikkomponententeilen (2, 3, 4, 5) zum Abstrahlen eines Lichtspots auf eine Aufzeichnungsoberfläche einer Platte (1), auf der Information aufgezeichnet wird, und ferner mit einem Halter zum Halten der Optikkomponententeile; Antriebsmittel (8a-b, 9a-d) zum Antreiben des mobilen Körpers in zwei Richtungen umfassend eine Radialrichtung (22) der Platte und eine Richtung (21) orthogonal zu einer durch die Oberfläche der Platte definierten Ebene; und Haltemittel (10a-d) zum Halten des mobilen Körpers derart, daß der mobile Körper in den zwei Richtungen bewegt werden kann;
wobei die Haltemittel (10a-d) wenigstens zwei längliche, im wesentlichen planare, elastische Blätter umfassen, die jeweils eine im wesentlichen in Längsrichtung verlaufende Längsachse und eine Querachse in der Ebene des Blatts definieren, die orthogonal zu der Längsachse ist, und dadurch gekennzeichnet, daß jede Querachse weder parallel zu der Oberfläche der Platte (1) noch orthogonal zu der Oberfläche der Platte (1) ist.

2. Antriebsvorrichtung für Optikkomponententeile nach Anspruch 1, wobei die Blätter (10) Breiten besitzen, die mit im wesentlichen gleichen Winkeln (31) relativ zu der durch die Platte definierten Ebene ausgerichtet sind.

3. Antriebsvorrichtung für Optikkomponententeile nach Anspruch 1, wobei die Blätter (10) an den mobilen Körper (7) an ersten Anbindungsflächen angebunden sind und an einem Befestigungsteil an zweiten Anbindungsflächen angebunden sind, die nicht parallel zu den ersten Anbindungsflächen sind.

4. Antriebsvorrichtung für Optikkomponententeile nach Anspruch 1, Anspruch 2 oder Anspruch 3, ferner umfassend ein viskoses Teil, das an einem Teil der oder im wesentlichen der ganzen Oberfläche der Blätter (10) angebracht ist.

5. Antriebsvorrichtung für Optikkomponententeile nach Anspruch 1, Anspruch 2 oder Anspruch 3, wobei jedes der Blätter (10) einem Verhältnis einer Dicke desselben relativ zu einer Breite desselben genügt, wobei das Verhältnis nicht weniger als 7% beträgt.

6. Antriebsvorrichtung für Optikkomponententeile nach Anspruch 5, wobei jedes der Blätter (10) wenigstens einen Abschnitt (W2) mit reduzierter Breite besitzt.

7. Antriebsvorrichtung für Optikkomponententeile nach Anspruch 6, wobei jedes der Blätter (10) wenigstens zwei Abschnitte (W4) mit reduzierter Breite besitzt, die an jedem Endabschnitt des Blatts in der Nähe von Abschnitten (W1) angeordnet sind, an welchen das Blatt an dem mobilen Körper (7) und dem Befestigungselement angebracht ist.

8. Antriebsvorrichtung für Optikkomponententeile nach Anspruch 1, Anspruch 2 oder Anspruch 3, wobei die Haltemittel (10) die Blätter und wenigstens vier Verstärkungsteile umfassen.

9. Antriebsvorrichtung für Optikkomponententeile nach einem der vorangehenden Ansprüche, dadurch gekennzeichnet, daß die Längsachsen der länglichen Blätter (10) sich in einer Richtung erstrecken, die im wesentlichen parallel zu der durch die Oberfläche der Platte (11) definierten Ebene ist.

10. Antriebsvorrichtung für Optikkomponententeile nach einem der vorangehenden Ansprüche, dadurch gekennzeichnet, daß die Längsachsen der länglichen Blätter (10) im wesentlichen parallel zueinander sind.

11. Antriebsvorrichtung für Optikkomponententeile nach Anspruch 1, wobei der mobile Körper (7) ferner Lichtempfangsmittel aufweist,
und wobei Haltemittel der Antriebseinrichtung für Optikkomponententeile wenigstens vier elastische Blätter (10) umfassen, wobei die Blätter eine Mehrzahl von Leitungen (601) besitzen, deren erste Enden elektrisch mit den lichtemittierenden Mitteln (2), den lichtempfangenden Mitteln wie auch den Antriebsmitteln verbunden sind, und deren zweite Enden elektrisch mit einer externen Schaltung auf der Außenseite der Antriebsvorrichtung für Optikkomponententeile verbunden sind.

12. Antriebsvorrichtung für Optikkomponententeile nach Anspruch 1, wobei der mobile Körper (7) ferner lichtempfangende Mittel aufweist und die Haltemittel wenigstens vier elastische Blätter (10) und wenigstens vier Verstärkungsteile umfassen, wobei die Blätter eine Mehrzahl von Leitungen (601) besitzen, deren erste Enden elektrisch mit den lichtemittierenden Mitteln (2) und den lichtempfangenden Mitteln wie auch den Antriebsmitteln verbunden sind, und deren zweite Enden elektrisch mit einer externen Schaltung auf der Außenseite der Antriebsvorrichtung für Optikkomponententeile verbunden sind.

## Revendications

1. Dispositif de déplacement de composants optiques, comprenant :
un corps mobile (7) ayant des composants optiques (2, 3, 4, 5) servant à envoyer un point lumineux sur une surface d'enregistrement d'un disque (1) sur lequel des informations sont enregistrées, et ayant également un moyen de soutien pour retenir lesdits composants optiques; des moyens de déplacement (8a-b, 9a-d) pour entraîner ledit corps mobile dans deux directions comprenant une direction radiale (22) du disque et une direction (21) perpendiculaire à un plan défini par la surface du disque ; et des moyens de support (10a-d) pour supporter ledit corps mobile de telle sorte que ledit corps mobile puisse être déplacé dans lesdites deux directions ;
lesdits moyens de support (10a-d) comprenant au moins deux longues plaques élastiques essentiellement planes, qui définissent chacune un axe généralement longitudinal et un axe latéral dans le plan de la plaque qui est perpendiculaire à l'axe longitudinal, et
caractérisé en ce que chaque axe latéral n'est ni parallèle à la surface du disque (1) ni perpendiculaire à la surface du disque (1).

2. Dispositif de déplacement de composants optiques selon la revendication 1, dans lequel la largeur desdites plaques (10) est dirigée suivant un angle (31) essentiellement égal par rapport à audit plan défini par le disque.

3. Dispositif de déplacement de composants optiques selon la revendication 1, dans lequel lesdites plaques (10) sont asscmblées audit corps mobile (7) sur des premières surfaces d'assemblage et assemblées à un élément de fixation sur des deuxièmes surfaces d'assemblage qui ne sont pas parallèles auxdites premières surfaces d'assemblage.

4. Dispositif de déplacement de composants optiques selon la revendication 1, la revendication 2 ou la revendication 3, comprenant en outre un élément visqueux fixé à une partie ou presque la totalité de la surface desdites plaques (10).

5. Dispositif de déplacement de composants optiques selon la revendication 1, la revendication 2 ou la revendication 3, dans lequel chacune desdites plaques (10) satisfait à un rapport entre son épaisseur et sa largeur, ledit rapport n'étant pas inférieur à 7 %.

6. Dispositif de déplacement de composants optiques selon la revendication 5, dans lequel chacune desdites plaques (10) possède au moins une partie de largeur réduite (W2).

7. Dispositif de déplacement de composants optiques selon la revendication 6, dans lequel chacune desdites plaques (10) possède au moins deux parties de largeur réduite (W4) situées au niveau de chaque partie d'extrémité de la plaque, au voisinage des parties (W1) au niveau desquelles la plaque est montée sur ledit corps mobile (7) et sur ledit élément de fixation.

8. Dispositif de déplacement de composants optiques selon la revendication 1, la revendication 2 ou la revendication 3, dans lequel lesdits moyens de support (10) comprennent lesdites plaques et au moins quatre éléments de renforcement.

9. Dispositif de déplacement de composants optiques selon l'une quelconque des revendications précédentes, caractérisé en ce que les axes longitudinaux des longues plaques (10) s'étendent dans une direction qui est essentiellement parallèle au plan défini par la surface du disque (11).

10. Dispositif de déplacement de composants optiques selon l'une quelconque des revendications précédentes, caractérisé en ce que les axes longitudinaux des longues plaques (10) sont essentiellement parallèles l'un à l'autre.

11. Dispositif de déplacement de composants optiques selon la revendication 1, dans lequel le corps mobile (7) comprend en outre des moyens récepteurs de lumière, et
lesdits moyens de support dudit dispositif de déplacement de composants optiques comprennent au moins quatre plaques élastiques (10), lesdites plaques ayant une pluralité de câbles (601) dont la première extrémité est connectée électriquement auxdits moyens émetteurs de lumière (2) et auxdits moyens récepteurs de lumière, ainsi qu'auxdits moyens de déplacement, et dont la deuxième extrémité est connectée électriquement à un circuit externe situé à l'extérieur dudit dispositif de déplacement de composants optiques.

12. Dispositif de déplacement de composants optiques selon la revendication 1, dans lequel le corps mobile (7) comprend en outre des moyens récepteurs de lumière, et lesdits moyens de support comprennent au moins quatre plaques élastiques (10) et au moins quatre éléments de renforcement, lesdites plaques ayant une pluralité de câbles (601) dont la première extrémité est connectée électriquement auxdits moyens émetteurs de lumière (2) et auxdits moyens récepteurs de lumière, ainsi qu'auxdits moyens de déplacement, et dont la deuxième extrémité est connectée électriquement à un circuit externe situé à l'extérieur dudit dispositif de déplacement de composants optiques.
